# DEMANDE DE BREVET EUROPEEN

(11) **EP 1 927 393 A1**
(43) Date de publication de la demande: **04.06.2008**
(21) Numéro de dépôt: 07301585.1
(22) Date de dépôt: 26.11.2007
(51) Int. Cl.: B01J 2/00, B01F 5/20, B01F 5/24, E01C 19/10

(54) **Procédé et dispositif pour enrogabe d'une matière particulaire solide par un copmose fluide, unité de production d'enrobes bitume-SBS**

(30) Priorité: 28.11.2006 FR 0655157
(71) Demandeur: COLAS, 92100 Boulogne-Billancourt (FR)
(72) Inventeur: Cros, Jean-Pierre, 92160 Antony (FR); Bosquillon de Jenlis, Octave, 75007 Paris (FR); Peloux Prayer, Marie, 31240 Saint-Jean (FR); Cros, Laurent, 31240 Saint-Jean (FR)
(74) Mandataire: Michelet, Alain

(57) **Abrégé**

L'invention concerne un procédé d'enrobage par mélange d'une matière particulaire (6) solide par un composé fluide (3) dans lequel, dans un mélangeur (10) on crée un écoulement d'une nappe (2) continue de composé fluide, la nappe ayant une forme conique sensiblement symétrique de révolution à base circonférentielle large et se refermant sur elle-même à son sommet (5) et que l'on introduit la matière particulaire sous forme d'une colonne de matière particulaire (6) s'écoulant sensiblement au centre de la base de la forme conique de la nappe de composé fluide, la colonne se dirigeant vers le sommet de la nappe, pour qu'au sommet, la colonne de matière particulaire soit mise au contact et entourée par le composé fluide et s'y mélange. Un dispositif mélangeur (10) ainsi qu'une unité de production d'enrobés bitume-SBS complètent l'invention.

## Description

La présente invention concerne un procédé et un dispositif pour enrobage d'une matière particulaire solide par un composé fluide ainsi qu'une unité de production d'enrobés bitume-SBS. Elle a des applications dans le domaine de la préparation de matériaux complexes et notamment de matériaux à base de bitume et comportant des particules.

On connaît dans le domaine de la préparation de matériaux complexes des appareils industriels permettant de mélanger intimement des produits particulaires avec des produits fluides pour former un mélange homogène. En général ces appareils utilisent des moyens mécaniques d'agitation ou trituration du mélange de produits avec des pales dans une cuve et/ou de la cuve elle-même. Lorsque la préparation doit se faire en continu, l'utilisation de tels appareils devient plus complexe car ils sont plutôt adaptés à des préparations par lots. Il faut alors trouver un moyen de prélèvement du mélange qui ne risque pas d'être perturbé par l'arrivée des produits initiaux dans l'appareil et qui assure une qualité homogène du prélèvement.

On connaît en particulier par DE-2650631, EP-0396038A2, DE-3344845 et GB-203794 des mélangeurs avec écoulement de nappe fluide en périphérie d'un écoulement de matière particulaire. Dans ces mélangeurs, le fluide est injecté dans certaines directions dans une conduite torique de distribution du fluide. Il se crée donc des conditions d'écoulement spécifiques pouvant être différentes d'une zone à l'autre de la conduite de distribution en fonction de la direction d'injection, ce qui peut être source de problème pour des fluides particuliers comme le bitume ou un fluide à plusieurs composants.

La présente invention permet d'obtenir un mélange de qualité entre une matière particulaire solide et un composé fluide en continu et ce, quelles que soient les formes des particules solides, quelle que soit la différence de densité entre la matière particulaire et le composé fluide et, en outre, quelle que soit la différence de température entre les deux. Elle consiste à obtenir une nappe continue du composé fluide qui se referme sur elle-même et sur la matière particulaire solide. Grâce aux forces mises en jeu dans la nappe du fluide et la matière particulaire le mélange peut s'effectuer tout en entraînant ledit mélange. Par ailleurs, ce mélange a lieu en l'absence de contact avec d'autres matériaux (pales, parois...) et l'écoulement du mélange en est encore amélioré.

Ainsi, l'invention concerne tout d'abord un procédé d'enrobage par mélange d'une matière particulaire solide par un composé fluide.

Selon l'invention de procédé, dans un mélangeur on crée un écoulement d'une nappe continue de composé fluide, la nappe ayant une forme conique, hyperbolique ou parabolique, sensiblement symétrique de révolution à base circonférentielle large et se refermant sur elle-même à son sommet et on introduit la matière particulaire sous forme d'une colonne de matière particulaire s'écoulant sensiblement au centre de la base de la nappe de composé fluide, la colonne se dirigeant vers le sommet de la nappe, pour qu'au sommet, la colonne de matière particulaire soit mise au contact et entourée par le composé fluide et s'y mélange. (le terme colonne couvre un écoulement plus ou moins serré de particules indépendantes entre-elles)

Dans divers modes de mise en oeuvre de l'invention de procédé, les moyens suivants pouvant être utilisés seuls ou selon toutes les combinaisons techniquement possibles, sont employés :
- on met en oeuvre un mélangeur qui comporte une paroi périphérique entourant la nappe et tel que l'écoulement de ladite nappe se fait à distance de ladite paroi périphérique jusqu'à au moins le sommet,
- on met en oeuvre un mélangeur qui comporte une paroi d'extrémité côté sommet de la nappe et tel que la paroi d'extrémité qui comporte une ouverture pour sortie du mélange soit à distance du sommet, afin que l'écoulement de matière particulaire mélangée (en pratique, en cours de mélange au sommet et après) se poursuive à distance d'une paroi sur une longueur déterminée,
- on met en oeuvre une paroi d'extrémité qui est conique, l'ouverture pour sortie du mélange étant au sommet de la paroi d'extrémité conique dans l'axe de la colonne de matière particulaire,
- le mélangeur est dans une cuve,
- on met en oeuvre un mélangeur qui est fermé, (sauf orifices d'introduction des produits et de sortie du mélange),
- le mélangeur est en métal et comporte au moins une fenêtre transparente pour visualisation du fonctionnement interne du mélangeur,
- on assure le mélange sous pression,
- on assure un écoulement sensiblement vertical dans le mélangeur, la colonne de matière particulaire s'écoulant sensiblement verticalement vers le bas et la base circonférentielle de la nappe est dans un plan sensiblement horizontal,
- on crée la nappe par mise en oeuvre d'une conduite de distribution du composé fluide qui est torique et qui comporte une ligne d'ouverture circulaire continue le long de la conduite torique et d'un déflecteur aval pour orienter vers le sommet de la forme conique la nappe sortant de la conduite torique par la ligne d'ouverture,
- le déflecteur est incliné selon un angle déterminé par rapport à la verticale, ledit angle étant adapté au moins selon les caractéristiques physico-chimiques du composé fluide,
- le déflecteur est incliné à environ 60° par rapport à la verticale,
- le déflecteur est une plaque,
- le déflecteur est un canal allongé dans le sens de l'écoulement,
- la conduite de distribution torique est de section circulaire,
- la conduite de distribution torique est de section carrée,
- la conduite de distribution torique est de section rectangulaire,
- la conduite de distribution torique est de section polygonale,
- on introduit le composé fluide dans la conduite de distribution torique par au moins deux conduites d'amenées, les conduites d'amenées étant distribuées équiangulairement le long de la conduite de distribution,
- on introduit le composé fluide dans la conduite de distribution torique par deux conduites d'amenées, les conduites d'amenées étant à l'opposée l'une de l'autre le long de la conduite de distribution, (les deux conduites d'amenées sont à 180° l'une de l'autre)
- on dispose les conduites d'amenées sur une face de la conduite de distribution qui est sensiblement perpendiculaire à la face de la conduite de distribution portant la ligne d'ouverture circulaire,
- on dispose les conduites d'amenées selon une direction d'arrivée sur la conduite de distribution sensiblement parallèle au plan de la ligne d'ouverture circulaire de la conduite de distribution,
- on dispose les conduites d'amenées selon une direction d'arrivée sur la conduite de distribution sensiblement inclinée par rapport au plan de la ligne d'ouverture circulaire de la conduite de distribution,
- l'inclinaison de la direction d'arrivée des conduites d'amenées est telle que le composé fluide à une direction à l'entrée de la conduite de distribution divergente de la direction du composé fluide traversant la ligne d'ouverture circulaire de la conduite de distribution,
- l'inclinaison de la direction d'arrivée des conduites d'amenées est d'environ 15° vers le haut par rapport à l'horizontale lorsque la ligne d'ouverture circulaire est à la face inférieure de la conduite de distribution,
- on dispose les conduites d'amenées selon une direction d'arrivée sur la conduite de distribution sensiblement inclinée par rapport au plan de la ligne d'ouverture circulaire de la conduite de distribution et, de préférence, l'inclinaison de la direction d'arrivée des conduites d'amenées est d'environ 15° vers le haut par rapport à l'horizontale lorsque la ligne d'ouverture circulaire est à la face inférieure de la conduite de distribution,
- on dispose dans la conduite de distribution de moyens permettant de sensiblement égaliser l'écoulement du composé fluide à travers et le long de la ligne d'ouverture circulaire de la conduite de distribution,
- on met en oeuvre un composé fluide qui est une matière d'enrobage et une matière particulaire qui est du styrène butadiène styrène ou SBS,
- la matière d'enrobage est une matière à base bitumineuse d'enrobage ou une matière d'enrobage issue de la chimie organique ou végétale sous forme de plusieurs composants.

L'invention concerne également un dispositif de mélange pour enrobage d'une matière particulaire solide par un composé fluide.

Selon l'invention de dispositif, ce dernier est un mélangeur comportant des moyens pour crée un écoulement d'une nappe continue de composé fluide, la nappe ayant une forme conique hyperbolique ou parabolique sensiblement symétrique de révolution à base circonférentielle large et se refermant sur elle même à son sommet et il comporte des moyens permettant d'y introduire la matière particulaire sous la forme d'une colonne de matière particulaire s'écoulant sensiblement au centre de la base de la nappe de composé fluide, la colonne se dirigeant vers le sommet de la nappe, pour qu'au sommet, la colonne de matière particulaire soit mise au contact et entourée par le composé fluide et s'y mélange.

Dans divers modes de mise en oeuvre de l'invention de dispositif, les moyens suivants pouvant être utilisés seuls ou selon toutes les combinaisons techniquement possibles, sont employés :
- le dispositif comporte un ou plusieurs moyens permettant l'exécution du procédé de l'invention selon l'une ou plusieurs des caractéristiques précédemment listées,
- dans le mélangeur l'écoulement est sensiblement vertical, la colonne de matière particulaire s'écoulant sensiblement verticalement et la base circonférentielle de la nappe étant dans un plan sensiblement horizontal,
- le mélangeur est dans une cuve comportant un fond avec une ouverture pour sortie du mélange, les parois de la cuve restant à distance de l'écoulement de la nappe et ensuite du mélange après le sommet sur une longueur déterminée avant l'ouverture de fond,
- les moyens pour créer l'écoulement de la nappe sont une conduite de distribution du composé fluide qui est torique et qui comporte sur sa face inférieure une ligne d'ouverture circulaire continue le long de la conduite torique et un déflecteur aval pour orienter vers le sommet de la forme conique la nappe sortant de la conduite torique par la ligne d'ouverture,
- le composé fluide est introduit dans la conduite de distribution torique par au moins deux conduites d'amenées, les conduites d'amenées étant distribuées équiangulairement le long de la conduite de distribution, la direction d'arrivée des conduites d'amenées étant d'environ 15° vers le haut par rapport à l'horizontale,
- le composé fluide est introduit dans la conduite de distribution torique par deux conduites d'amenées, les conduites d'amenées étant à l'opposée l'une de l'autre le long de la conduite de distribution, (les deux conduites d'amenées sont à 180° l'une de l'autre)
- le composé fluide est une matière d'enrobage à base bitumineuse et la matière particulaire est du styrène butadiène styrène ou SBS.

L'invention concerne enfin une unité de production d'enrobés bitume-SBS comportant un dispositif de mélange selon l'invention ou comportant un moyen permettant l'exécution du procédé de l'invention.

En particulier, l'unité de production d'enrobés bitume-SBS comporte en amont du dispositif de l'invention, d'une part, un moyen de stockage de particules de SBS et un moyen de fourniture de SBS au dispositif de l'invention et, d'autre part, une réserve matière d'enrobage à base bitumineuse, la matière d'enrobage étant rendue fluide puis envoyée dans le dispositif de l'invention par un moyen de pompage et à travers un moyen de contrôle de débit et, en aval, d'un moyen de malaxage ou de broyage puis de stockage de l'enrobé bitume-SBS. Dans une variante, l'unité de production d'enrobés bitume-SBS comporte en outre en aval du dispositif de l'invention, d'une pompe de refoulement. Dans une variante, les particules de SBS subissent un pré-traitement en amont. Dans une variante, l'unité comporte un filtre pour bitume en amont du dispositif de l'invention.

Des essais comparatifs entre divers types de systèmes de mélange et le dispositif de l'invention ont été effectués et ce dernier a présenté de meilleurs résultats aussi bien en terme de sécurité (débordement), de qualité de mélange, d'encombrement, de capacité de production, de facilité d'entretien et de coût.

La présente invention va maintenant être exemplifiée sans pour autant en être limitée avec la description qui suit en relation avec les figures suivantes:
la Figure 1 qui représente un schéma du principe de création d'une nappe conique d'un composé fluide à la base de l'invention,
la Figure 2 qui représente en coupe verticale et axiale une conduite de distribution torique au niveau d'arrivée de deux conduites d'amenées de composé fluide ainsi qu'un déflecteur aval et l'écoulement du composé fluide,
la Figure 3 qui représente en coupe verticale et axiale une conduite de distribution torique selon une vue de direction décalée par rapport à la Figure 2 et avec un déflecteur aval d'un autre type que celui de la Figure 2,
la Figure 4 qui représente un premier exemple d'unité de production d'enrobés bitume-SBS, et
les Figure 5, 6 et 7 qui représentent différentes vues partielles d'un second exemple d'unité de production d'enrobés bitume-SBS.

Dans le contexte de l'invention on utilise le terme bitume pour le composé fluide d'une manière générique pour couvrir aussi bien une matière d'enrobage à base bitumineuse qu'une matière d'enrobage issue de la chimie organique ou végétale sous forme de plusieurs composants

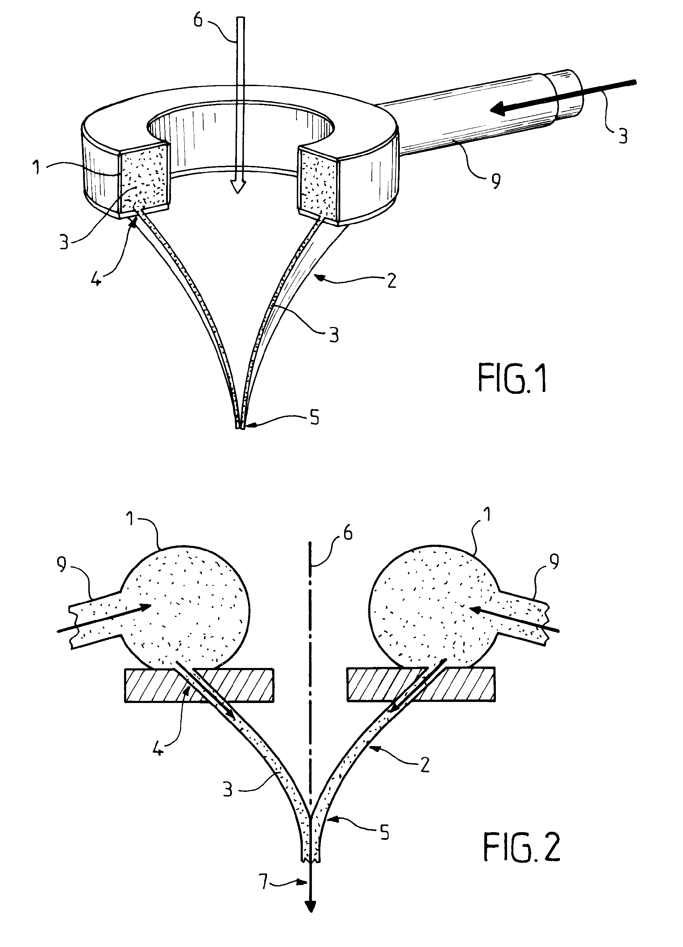

La Figure 1 permet de visualiser le principe du mélangeur de l'invention avec création d'une nappe 2 continue conique à symétrie de révolution d'un composé fluide 3 et au centre de laquelle, le long de l'axe de symétrie de révolution, on envoie une colonne d'une matière particulaire 6 sur laquelle vient se refermer la nappe 2 au sommet 5 du cône. La nappe s'écoule librement dans le mélangeur, les parois du mélangeur étant à distance de la nappe entre sa base et au moins son sommet. De préférence, l'écoulement libre, c'est-à-dire à distance des parois, se poursuit au-delà du sommet sur une certaine distance.

Dans la mise en oeuvre préférée, la nappe de composé fluide s'écoule vers le bas et le sommet 5 du cône est en bas par rapport à la base du cône qui est vers le haut et qui se trouve au niveau d'un déflecteur 4 orientant la matière fluide. Du fait de cet écoulement vers le bas, la nappe est soumise à la gravité et la génératrice du cône n'est plus une droite mais une courbe parabolique. On comprend que dans le cadre de l'invention, et plus généralement que dans la seule mise en oeuvre préférée, la génératrice de la forme conique de la nappe peut être une droite ou une autre forme de ligne permettant la création d'une nappe à symétrie de révolution.

Afin de créer la nappe 2 continue à symétrie de révolution, une conduite de distribution 1 torique dont la face inférieure est ouverte le long d'une ligne circulaire continue à travers laquelle le composé fluide peut s'écouler, est mise en oeuvre. Sur le schéma explicatif de la Figure 1, la section de la conduite de distribution est sensiblement carrée. On verra en relation avec les figures suivantes que le mode préféré de mise en oeuvre utilise une conduite de distribution torique de section circulaire. Un moyen d'orientation du type déflecteur 4 est également mis en oeuvre pour orienter la nappe sortant de la conduite de distribution vers l'axe de révolution de la nappe. Toujours sur la Figure 1, le déflecteur 4 correspond à une ouverture de direction inclinée dans la paroi inférieure de la conduite de distribution 1. Enfin, le composé fluide 3 est envoyé dans la conduite de distribution 1 torique par au moins une conduite d'amenée 9 qui arrive de préférence latéralement sur la conduite de distribution.

Sur la Figure 2, on a la mise en oeuvre préférée d'une conduite de distribution 1 torique qui est à section circulaire. Afin de mieux répartir le flot de composé fluide 3 le long de la conduite de distribution et d'obtenir en sortie une nappe 2 relativement homogène sur sa circonférence, les conduites d'amenées 9 sont inclinées dans le sens d'écoulement, du bas vers le haut, afin que la matière fluide ait une direction d'arrivée dans la conduite de distribution plutôt divergente par rapport à la direction d'écoulement en sortie de conduite de distribution. La Figure 2 permet de mieux visualiser le déflecteur 4 qui est ici une ouverture de direction inclinée dans une plaque support d'une certaine épaisseur. Une colonne de matière particulaire 6 tombe le long de l'axe de symétrie de révolution de la nappe 2 et est mise au contact du composé fluide 3 au sommet 5 du cône, le mélange et l'enrobage des particules par le composé fluide se poursuivant en aval le long d'un trajet 7 de longueur déterminée avant que le mélange ne quitte le mélangeur.

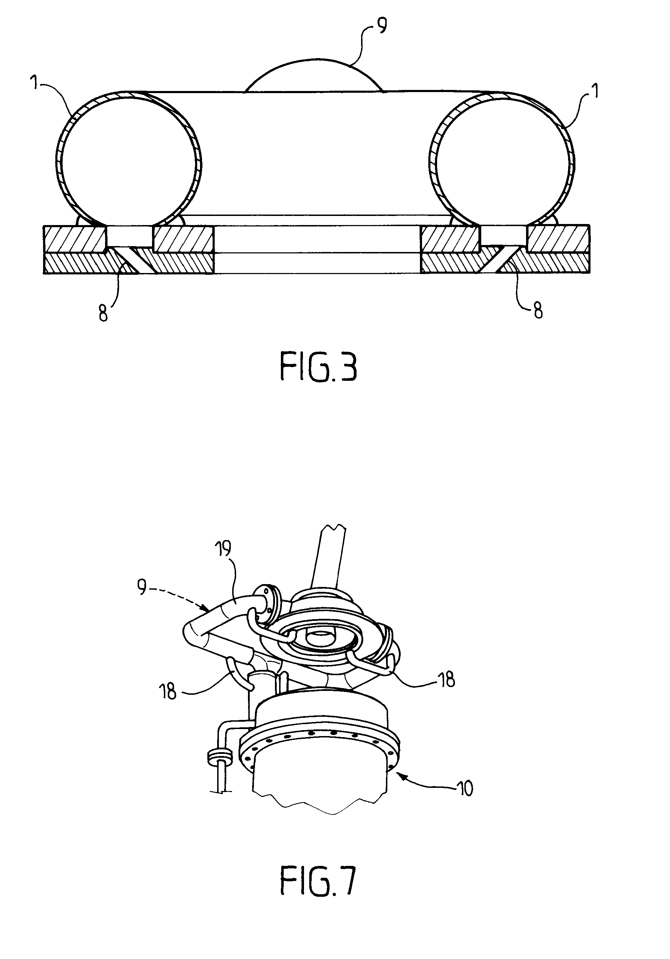

Sur la Figure 3, on peut voir une autre forme de réalisation d'un moyen d'orientation qui est un déflecteur fait d'une plaque biseautée 8 amovible sur une plaque support fixe supportant la conduite de distribution 1 et qui comporte comme cette dernière une ouverture circulaire continue pour que le composé fluide puisse effectivement s'écouler vers le déflecteur.

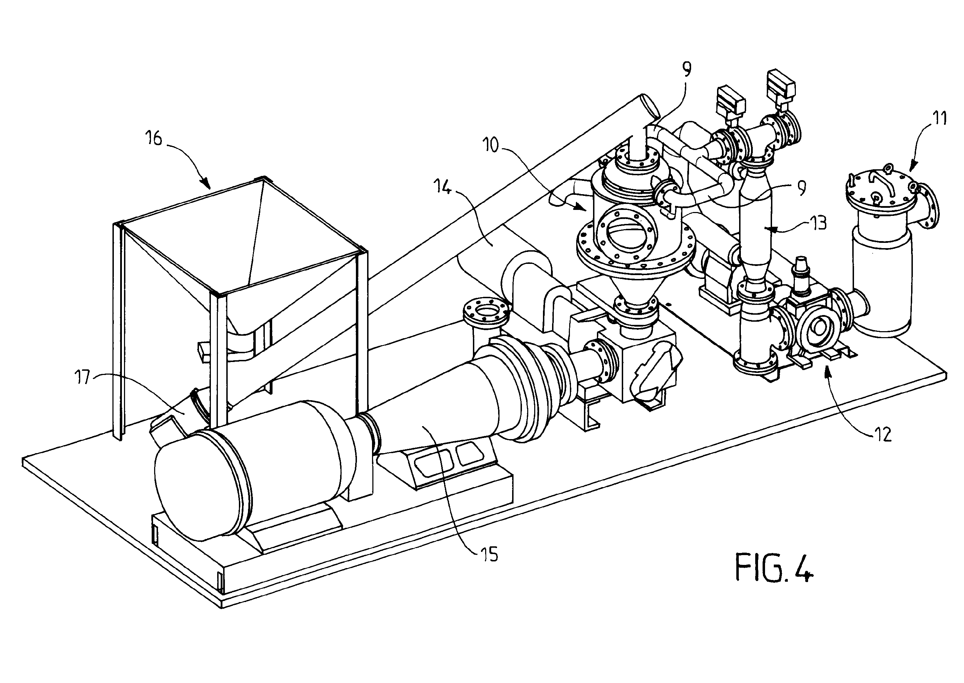

La présente invention est mise en oeuvre pour la réalisation d'enrobés bitume-SBS, et la Figure 4 donne un premier exemple d'unité de production d'enrobés bitume-SBS la mettant en oeuvre.

Le mélangeur de l'invention référencé 10 est fermé par des parois et reçoit à sa partie supérieure, d'une part, latéralement le composé fluide par deux conduites d'amenées à 180° l'une de l'autre et, d'autre part, par le haut la matière particulaire montée par une vis sans fin 17 prélevant la matière particulaire d'une trémie 16. Le composé fluide qui provient d'une réserve en aval non représentée, traverse un filtre 11 puis une pompe 12 puis un moyen de contrôle et régulation de débit 13 par notamment un débitmètre massique à forces de Coriolis avant d'arriver au mélangeur 10. En sortie du mélangeur, le mélange bitume-SBS est repris par une pompe avant de passer dans un moyen de malaxage ou de broyage 15.

Le moyen de contrôle et de régulation est notamment destiné à éviter le remplissage de la cuve du mélangeur 10 et un risque de débordement de cette dernière. De préférence, une sonde de niveau capacitive est utilisée afin de détecter une telle situation due à la présence d'un niveau liquide dans la cuve, pour réguler le débit, voire arrêter le dispositif. En effet, il est préférable d'éviter qu'un niveau liquide se forme dans la cuve du mélangeur. A titre de sécurité supplémentaire, la cuve du mélangeur peut comporter un tube de vidange de trop plein.

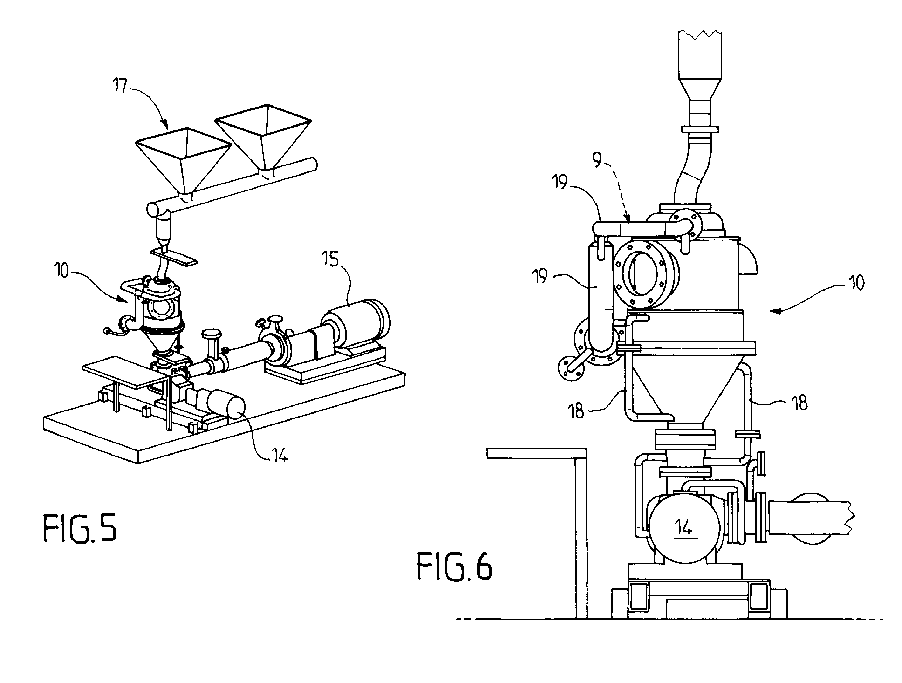

Dans un second exemple d'unité de production d'enrobés bitume-SBS, la matière particulaire est amenée par gravité vers la partie supérieure du mélangeur 10 à partir d'au moins une trémie 17 de stockage. Seule une partie de l'unité de production est représentée sur la Figure 5 avec la pompe aval 14 et le malaxeur ou le broyeur 15 qui lui fait suite.

Le bitume mis en oeuvre dans cet exemple doit être chauffé pour être rendu fluide. A cette fin des conduites caloporteuses supplémentaires sont mises en oeuvre dans l'unité. Ces conduites caloporteuses véhiculent un fluide à température élevée destiné à maintenir le bitume à une température comprise entre 130° et 180°, de préférence environ 160°, le long de son circuit de circulation dans l'unité. Les Figures 6 et 7 qui détaillent le mélangeur 10 permettent ainsi de visualiser ces conduites caloporteuses 18. Le fluide à température élevée est ainsi mis au contact, direct ou non selon le mode de réalisation, d'au moins une partie des conduites d'amenées 9, avec sur les Figures 6 et 7 des lignes de référence en pointillés pour signifier que la conduite d'amenée 9 est dans une gaine 19 chauffée par fluide caloporteur véhiculé par une conduite caloporteuse 18. De même, au moins une partie de la conduite de distribution est chauffée par fluide caloporteur, sur l'exemple de la Figure 7, ce chauffage concerne la partie inférieure de la conduite de distribution, notamment par une plaque support qui peut être creuse pour circulation du fluide caloporteur. D'autres parties de parois du mélangeur 10 sont également chauffées par fluide caloporteur, notamment vers la conduite de sortie et, plus en aval, notamment la pompe 14 comme représenté Figure 6.

On comprend que d'autres types de matières fluides ou liquides (ou, à tout le moins, pouvant être rendues fluides/liquides) peuvent être mis en oeuvre, et dans une plage de température adaptée à la caractéristique d'écoulement et d'utilisation. De même, d'autres types de matières particulaires que du SBS peuvent être mis en oeuvre comme tout type de polymère compatible, filler, charges... En outre, le SBS peut être associé à d'autres matières compatibles. Plus généralement, d'autres modalités de mise en oeuvre sont disponibles sans sortir du cadre de l'invention.

## Revendications

1. Mélangeur pour enrobage d'une matière particulaire (6) solide par un composé fluide (3) comportant : des moyens pour crée un écoulement d'une nappe (2) continue de composé fluide, la nappe ayant une forme conique hyperbolique ou parabolique sensiblement symétrique de révolution à base circonférentielle large et se refermant sur elle-même à son sommet (5), des moyens permettant d'y introduire la matière particulaire sous la forme d'une colonne de matière particulaire s'écoulant sensiblement au centre de la base de la nappe de composé fluide, la colonne se dirigeant vers le sommet de la nappe, pour qu'au sommet, la colonne de matière particulaire (6) soit mise au contact et entourée par le composé fluide et s'y mélange, dans le mélangeur l'écoulement étant sensiblement vertical, la colonne de matière particulaire s'écoulant sensiblement verticalement et la base circonférentielle de la nappe étant dans un plan sensiblement horizontal, les moyens pour crée l'écoulement de la nappe étant une conduite de distribution (1) du composé fluide qui est torique et qui comporte sur sa face inférieure une ligne d'ouverture circulaire continue le long de la conduite torique et un déflecteur aval pour orienter vers le sommet de la forme conique la nappe sortant de la conduite torique par la ligne d'ouverture, **caractérisé en ce que** le composé fluide est introduit dans la conduite de distribution torique par au moins deux conduites d'amenées (9), la direction d'arrivée des conduites d'amenées étant inclinée à environ 15° vers le haut par rapport à l'horizontale.

2. Mélangeur selon la revendication 1, **caractérisé en ce que** les conduites d'amenées sont distribuées équiangulairement le long de la conduite de distribution.

3. Mélangeur selon la revendication 1 ou 2, **caractérisé en ce qu'**il comporte côté sommet (5) de la nappe une paroi d'extrémité avec une ouverture pour sortie du mélange, ladite paroi d'extrémité étant à distance dudit sommet (5) afin que l'écoulement de matière particulaire mélangée se poursuive à distance d'une paroi sur une longueur déterminée (7).

4. Mélangeur selon la revendication 3, **caractérisé en ce que** la paroi d'extrémité est conique, l'ouverture pour sortie du mélange étant au sommet de la paroi d'extrémité conique dans l'axe de la colonne de matière articulaire.

5. Mélangeur selon l'une quelconque des revendications précédentes, **caractérisé en ce qu'**il est une cuve en métal et comporte au moins une fenêtre transparente pour visualisation du fonctionnement interne dudit mélangeur.

6. Mélangeur selon l'une quelconque des revendications précédentes, **caractérisé en ce qu'**il comporte une sonde de niveau destinée à détecter la présence d'un niveau liquide dans le mélangeur.

7. Unité de production d'enrobés bitume-SBS, **caractérisée en ce qu'**elle comporte un mélangeur et en outre, au moins, en amont du mélangeur, d'une part, un moyen de stockage de particules de SBS et un moyen de fourniture de SBS au mélangeur et, d'autre part, une réserve matière d'enrobage à base bitumineuse, la matière d'enrobage étant rendue fluide puis envoyée dans le mélangeur par un moyen de pompage et à travers un moyen de contrôle de débit et, en aval, un moyen de malaxage ou de broyage puis de stockage de l'enrobé bitume-SBS, et **en ce que** le mélangeur comporte des moyens pour créer un écoulement d'une nappe (2) continue de composé fluide qui est la matière d'enrobage rendue fluide, la nappe ayant une forme conique, hyperbolique ou parabolique, sensiblement symétrique de révolution à base circonférentielle large et se refermant sur elle-même à son sommet (5) et pour introduire une matière particulaire qui est le SBS sous forme d'une colonne de matière particulaire (6) s'écoulant sensiblement au centre de la base de la nappe de composé fluide, la colonne se dirigeant vers le sommet de la nappe, pour qu'au sommet, la colonne de matière particulaire soit mise au contact et entourée par le composé fluide et s'y mélange.

8. Unité de production d'enrobés bitume-SBS selon la revendication 7, **caractérisée en ce qu'**elle comporte un mélangeur qui est en outre selon l'une quelconque des revendications 1à 6.

9. Unité de production selon la revendication 8,
**caractérisée en ce que** au moins une partie d'une conduite de distribution du mélangeur est chauffée par un fluide caloporteur.

10. Unité de production selon la revendication 8 ou 9, **caractérisée en ce qu'**elle comporte un moyen de contrôle et de régulation notamment destiné à éviter le remplissage du mélangeur.
